# EUROPÄISCHE PATENTSCHRIFT

(11) **EP 4 434 788 B1**
(45) Veröffentlichungstag und Bekanntmachung des Hinweises auf die Patenterteilung: **12.08.2026**
(21) Anmeldenummer: 24152147.5
(22) Anmeldetag: 16.01.2024
(51) Int. Cl.: A01D 69/00, A01D 43/08, B60K 5/12

(54) **ERNTEMASCHINE**
HARVESTING MACHINE
MACHINE DE RÉCOLTE

(30) Priorität: 20.03.2023 DE 102023106857
(43) Veröffentlichungstag der Anmeldung: 25.09.2024
(73) Patentinhaber: CLAAS Selbstfahrende Erntemaschinen GmbH, 33428 Harsewinkel (DE)
(72) Erfinder: Renneke, Elmar, 33129 Delbrück (DE); Thies, Sören, 33442 Herzebrock-Clarholz (DE); Hugenroth, Ludger, 33428 Harsewinkel (DE); Heimsath, Christoph, 49219 Glandorf (DE)
(74) Vertreter: CLAAS Gruppe

(56) Entgegenhaltungen:
- WO-A1-2020/241157
- US-A- 5 740 876
- US-A1- 2007 023 221
- US-A1- 2008 054 538

## Beschreibung

Die Erfindung betrifft eine selbstfahrende Erntemaschine, insbesondere einen Feldhäcksler, gemäß dem Oberbegriff des Anspruchs 1.

Aus der DE 10 2014 108 026 A1 ist eine als Feldhäcksler ausgebildete selbstfahrende Erntemaschine bekannt, welche ein Vorsatzgerät zur Aufnahme von Erntegut sowie ein Einzugsorgan aufweist. Das Einzugsorgan führt von dem Vorsatzgerät aufgenommenes Erntegut einer Häckseleinrichtung des Feldhäckslers zu. Die Häckseleinrichtung umfasst eine von einer Antriebswelle angetriebene Häckseltrommel. Der Feldhäcksler weist ein Antriebssystem auf, dass ein von einem Verbrennungsmotor angetriebene Getriebeanordnung mit einer Abtriebsriemenscheibe umfasst. Die Abtriebsriemenscheibe ist von einem als Hauptriemen ausgeführten Antriebsriemen umschlungen, welcher unter anderem die Häckseleinrichtung sowie weitere Arbeitsorgane des Feldhäckslers antreibt. Der Antriebsriemen erstreckt sich von dem im hinteren Bereich des Feldhäckslers befindlichen Verbrennungsmotor hin zu den im vorderen Bereich befindlichen Arbeitsorganen. Beim Einschalten der Häckseleinrichtung sowie der weiteren Arbeitsorgane werden Kräfte und Momente von dem Antriebsriemen auf die Getriebeanordnung und den Verbrennungsmotor übertragen. Hierdurch resultiert eine Kippbewegung des Antriebsmotors in Vorwärtsfahrtrichtung, sodass die Hauptbelastungsrichtung der auf den Verbrennungsmotor eines Feldhäckslers wirkenden und von einer Motorlagerung aufzunehmenden Kräfte in Vorwärtsfahrtrichtung gerichtet ist. Die Zuleitungen zu dem Antriebsmotor, wie beispielsweise Leitungen zum Zuführen von Frischluft oder Kühlflüssigkeit werden durch die Kippbewegung belastet, wobei Verschleißerscheinungen auftreten können. Die Lagerung des Antriebsmotors ist zur Aufnahme der in die Hauptbelastungsrichtung wirkenden Kräfte optimal ausgelegt. Dennoch wirken bei einer Straßenfahrt oder im Feldeinsatz auch Kräfte auf den Antriebsmotor, die eine quer zur Vorwärtsfahrtrichtung gerichtete Kippbewegung des Antriebsmotors bewirken. Diese Kippbwegungen werden nicht optimal durch die Motorlager gedämpft, die zur Aufnahme der in die Hauptbelastungsrichtung wirkenden Kräfte optimiert sind.

Aus der US 5 740 876 A ist eine selbstfahrende Maschine mit einem Antriebsmotor und einem Fahrzeugrahmen bekannt, wobei der Antriebsmotor mit einer Mehrzahl von Motorlagern an dem Fahrzeugrahmen angeordnet ist, wobei ein erstes Motorlager relativ zu den weiteren Motorlagern um 90 Grad gedreht ausgerichtet ist, wobei die Maschine eine von dem Antriebsmotor angetriebene Getriebeanordnung umfasst, welche auf einer ersten Seite des Antriebsmotors angeordnet ist, und wobei ein Motorlager an der Getriebeanordnung angeordnet ist.

Es ist deshalb Aufgabe der Erfindung, die beschriebenen Nachteile des Standes der Technik zu vermeiden und insbesondere eine Motorlagerung des Antriebsmotors der Erntemaschine zu schaffen, welche eine verbesserte Dämpfung von Schwingungen des Antriebsmotors in eine in Vorwärtsfahrtrichtung gerichtete Hauptbelastungsrichtung bewirkt.

Diese Aufgabe wird erfindungsgemäß durch die kennzeichnenden Merkmale des Anspruchs 1 gelöst.

Gemäß Anspruch 1 wird eine selbstfahrende Erntemaschine, insbesondere Feldhäcksler, mit einem Antriebsmotor und einem Fahrzeugrahmen vorgeschlagen, wobei der Antriebsmotor mit einer Mehrzahl von Motorlagern an dem Fahrzeugrahmen angeordnet ist, wobei ein erstes Motorlager relativ zu den weiteren Motorlagern um 90 Grad gedreht ausgerichtet ist. Dadurch, dass eines der Motorlager um 90 Grad gedreht ausgerichtet ist, wird eine verbesserte Dämpfung von Kräften erreicht, die quer zu einer Hauptbelastungsrichtung auf den Antriebsmotor wirken.

Eine vorteilhafte Ausgestaltung sieht vor, dass sich eine Rotationsachse des ersten Motorlagers in Vorwärtsfahrtrichtung der Erntemaschine erstreckt und die Rotationsachsen der weiteren Motorlager quer zur Vorwärtsfahrtrichtung der Erntemaschine erstrecken. Das Motorlager mit der sich in Vorwärtsfahrtrichtung erstreckenden Rotationsachse ist primär dazu vorgesehen und eingerichtet solche Kräfte und Momente zu dämpfen, die quer zur Vorwärtsfahrtrichtung und somit quer zur Hauptbelastungsrichtung auf den Antriebsmotor wirken. Die weiteren Motorlager sind primär dazu vorgesehen und eingerichtet die in die Hauptbelastungsrichtung auf den Antriebsmotor wirkenden Kräfte und Momente zu dämpfen. Hierbei ist es ausreichend, wenn lediglich ein Motorlager mit einer sich quer zur Vorwärtsfahrtrichtung erstreckenden Rotationsachse vorgesehen ist. Hierbei ist es besonders bevorzugt, wenn die Rotationsachsen der Motorlager jeweils in einer horizontalen Ebene liegen um die auf den Antriebsmotor wirkenden Kräfte und Momente zu dämpfen.

Gemäß einer vorteilhaften Weiterbildung kann das erste Motorlager einen kleineren Durchmesser als die weiteren Motorlager aufweisen. Quer zur Hauptbelastungsrichtung auf den Antriebsmotor wirkende Kräfte und Momente sind üblicherweise geringer als die in die Hauptbelastungsrichtung wirkenden Kräfte und Momente, sodass das erste Motorlager einen kleineren Durchmesser aufweisen kann und somit kostengünstiger als die weiteren Motorlager ist.

Gemäß der Erfindung umfasst die Erntemaschine eine von dem Antriebsmotor angetriebene Getriebeanordnung, welche auf einer ersten Seite des Antriebsmotors angeordnet ist, wobei ein Motorlager an der Getriebeanordnung angeordnet ist. Ausgehend von der Getriebeanordnung werden verschiedene Arbeitsaggregate der Erntemaschine mittels eines Hauptantriebsriemens angetrieben. Beim Einschalten der Arbeitsaggregate wirken Kräfte und Momente auf das Getriebe. Dadurch, dass ein Motorlager unmittelbar an der Getriebeanordnung angeordnet ist, werden diese Kräfte und Momente besonders wirksam gedämpft. Erfindungsgemäß befindet sich das auf der ersten Seite befindliche Motorlager in Vorwärtsrichtung vor der Getriebeanordnung.

Vorzugsweise ist das erste Motorlager an einer der ersten Seite gegenüberliegenden zweiten Seite an dem Antriebsmotor angeordnet ist. Es hat sich gezeigt, dass eine derartige Positionierung besonders vorteilhaft für die optimale Dämpfung der auf den Antriebsmotor wirkenden Kräfte und Momente ist.

Besonders vorteilhaft ist es, wenn der Antriebsmotor mit drei Motorlagern an dem Fahrzeugrahmen angeordnet ist, wobei auf der zweiten Seite zwei Motorlager angeordnet sind, wobei das erste um 90 Grad gedreht ausgerichtete Motorlager in Vorwärtsfahrtrichtung das vordere der auf der zweiten Seite befindlichen Motorlager ist. Drei Motorlager sind bei einer derartigen Anordnung ausreichend um die auf den Antriebsmotor wirkenden Kräfte und Momente zu dämpfen.

Gemäß einer vorteilhaften Ausgestaltung kann der Feldhäcksler eine Luftfilteranordnung zum Filtern eines dem Antriebsmotor zuzuführenden Luftstroms aufweisen, wobei die Luftfilteranordnung drei in einer horizontalen Ebene parallel ausgerichtete Luftfilter umfasst. Die Anordnung von drei in einer horizontalen Ebene angeordneten Luftfiltern ist besonders vorteilhaft, da diese einen flachen Aufbau mit einer hohen Filterleistung aufweist. Ein flacher Aufbau der Luftfilteranordnung bewirkt zugleich, dass die Erntemaschine heckseitig ebenfalls flacher ausgebildet ist. Hierdurch hat ein Fahrer der Erntemaschine aus einem rückwärtigen Fenster in der Kabine einen guten Überblick über das Fahrzeug und die Erntesituation. Vorzugsweise kann an die drei Luftfilter ein w-förmiges Verbindungsstück zum Zusammenführen eines die Luftfilter durchströmenden Luftstroms angeordnet sein, sodass sich ein gleichmäßiger Druck innerhalb der den Antriebsmotor zuzuführenden Luftströmungen ausbildet.

Zur Überwachung eines Verschmutzungszustands der Luftfilteranordnung kann in einer von den Luftfiltern hin zu dem Antriebsmotor führenden Zuleitung ein Sensor, insbesondere ein Drucksensor angeordnet sein. Der Druck innerhalb der Zuleitung gibt einen Hinweis darauf, ob eine Reinigung oder ein Austausch der Luftfilter erforderlich ist.

Vorzugsweise kann der Sensor mit einer Steuerungseinrichtung in signalübertragender Weise verbunden sein, wobei die Steuerungseinrichtung dazu vorgesehen und eingerichtet ist, einen Hinweis zu einer Restlaufzeit der Luftfilteranordnung auszugeben, wobei vorzugsweise eine erste Hinweismeldung ausgegeben wird, sobald 30% Restlaufzeit der Luftfilteranordnung verbleiben und weiter vorzugsweise ein zweiter Hinweis ausgegeben wird, sobald die Restlaufzeit verbraucht ist. Mithin ist das Austauschen oder Reinigen der Luftfilteranordnung planbar, sodass ungeplante Ausfallzeiten der Erntemaschine vermieden werden können.

Besonders vorteilhaft ist es, wenn die Erntemaschine einen Harnstofftank umfasst mit einer Entnahmeeinheit zum Leiten und/oder Fördern von Harnstoff, wobei die Entnahmeeinheit in einer Vertiefung an der Oberseite des Harnstofftanks angeordnet ist. Durch die Anordnung der Entnahmeeinheit in der Vertiefung steht die Entnahmeeinheit nicht über eine Hauptfläche der Oberseite hervor, sodass die Entnahmeeinheit vor Beschädigungen geschützt ist.

Um Flüssigkeiten oder Verunreinigungen, beispielsweise Regenwasser, aus der Vertiefung abzuleiten, kann an die Vertiefung eine Sicke angrenzen, welche einen Kanal zum Ableiten eines Fluids aus der Vertiefung ausbildet.

Vorzugsweise weist der Harnstofftank im Tankboden eine Entnahmestelle auf, wobei die Entnahmestelle sich unterhalb einer Hauptbodenebene befindet. Die tiefer gelegene Entnahmestelle gewährleistet auch bei einem niedrigen Füllstand des Harnstofftanks eine zuverlässige Entnahme von Harnstoff mittels der Entnahmeeinheit.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Ansicht einer selbstfahrenden Erntemaschine;
- Figur 2: eine schematische Darstellung eines Antriebsmotors mit einem Fahrzeugrahmen;
- Figur 3: eine schematische Darstellung der an dem Fahrzeugrahmen angeordneten Motorlager;
- Figur 4: eine schematische Darstellung einer Luftfilteranordnung der Erntemaschine nach Figur 1;
- Figur 5a: eine schematische Darstellung eines Harnstofftanks der Erntemaschine nach Figur 1;
- Figur 5b: eine schematische Darstellung einer innerhalb des Harnstofftanks nach Figur 5a befindlichen Vertiefung;
- Figur 5c: eine schematische Schnittansicht des Harnstofftanks nach Figur 5a.

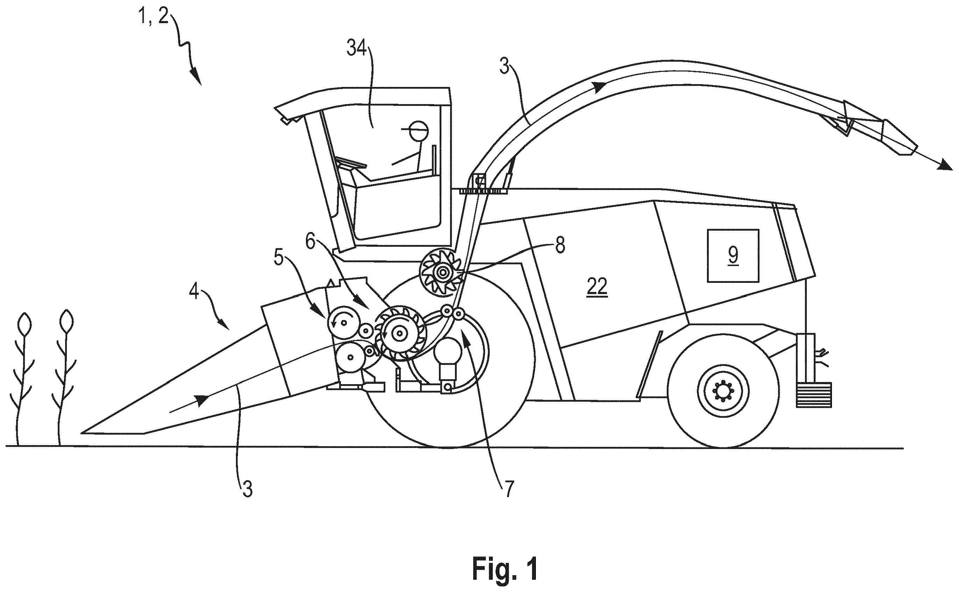

In Fig. 1 ist in schematischer Seitenansicht eine als Feldhäcksler 2 ausgeführte selbstfahrende Erntemaschine 1 bei der Ernte auf dem Feld dargestellt. Der Feldhäcksler 2 erntet beziehungsweise nimmt mittels eines Vorsatzgerätes 4 Pflanzen vom Feld auf, um das erhaltene Erntegut 3 in Form eines Erntegutstroms (in Fig. 1 als mit Pfeilen versehene Linie angedeutet) durch Arbeitsorgane, die als Bearbeitungs- und Förderorgane des Feldhäckslers 2 ausgeführt sind, zu führen und mittels einer Überladeeinrichtung in einen - nicht dargestellten - Ladebehälter abzuwerfen. Die Bearbeitungs- und Förderorgane des Feldhäckslers 2 umfassen unter anderem ein Einzugsorgan 5, welches aus mehreren, in einem Einzugsgehäuse hintereinander angeordneten Walzenpaaren besteht. Weiterhin eine Häckseleinrichtung 6, die mittels einer rotierenden, mit Messern ausgestatteten Häckseltrommel das Erntegut in Zusammenwirkung mit einer Gegenschneide zerkleinert, eine der Häckseleinrichtung 6 in einem Förderschacht in Gutstromrichtung nachgelagerte Konditioniereinrichtung 7 sowie einen der Konditioniereinrichtung 7 im Förderschacht in Gutstromrichtung nachgelagerten Auswurfbeschleuniger 8, welcher das Erntegut 3 mittels rotierender Wurfpaddel für den sicheren Auswurf durch die Überladeeinrichtung beschleunigt. Das Vorsatzgerät 4, das Einzugsorgan 5, die Häckseleinrichtung 6, die Konditioniereinrichtung 7 sowie der Auswurfbeschleuniger 8 werden nachfolgend als Arbeitsorgane bezeichnet. Im Heck des Feldhäckslers 2 ist ein als Verbrennungsmotor ausgeführter Antriebsmotor 9 angeordnet, der dem Antrieb der vorgenannten Arbeitsorgane 4, 5, 6, 7, 8 des Feldhäckslers 2 dient.

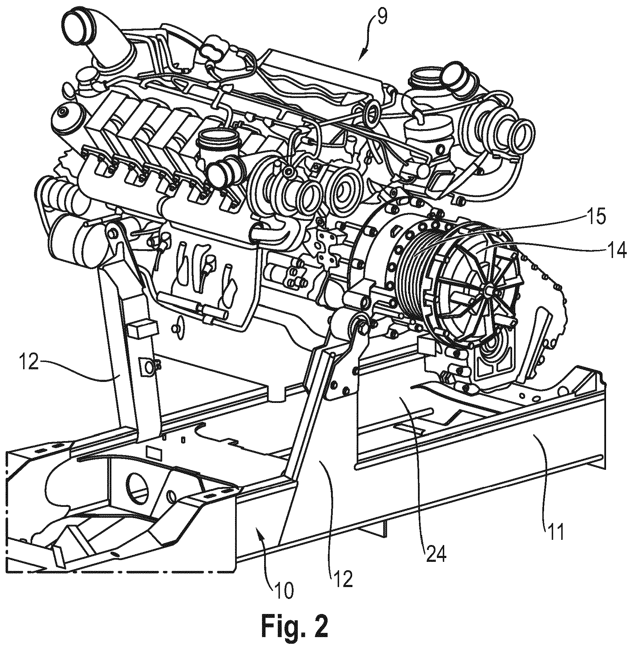

Fig. 2 zeigt den an einem Fahrzeugrahmen 10 der Erntemaschine 1 angeordneten Antriebsmotor 9. Zwei Längsstreben 11, 24 des Fahrzeugrahmens 10 erstrecken sich in Vorwärtsfahrtrichtung VF der Erntemaschine 1. Zur Halterung des Antriebsmotors 9 sind an den Längsstreben 11, 24 des Fahrzeugrahmens 10 drei sich vertikal erstreckende Tragarme 12 angeordnet, wobei an dem freien Ende des jeweiligen Tragarms 12 jeweils ein Motorlager 13 angeordnet ist. Die Motorlager 13 sind zur Lagerung des Antriebsmotors 9 vorgesehen und eingerichtet.

An dem Antriebsmotor 9 ist eine Getriebeanordnung 14 ortsfest angeordnet. Unter der Getriebeanordnung 14 kann im Sinne der vorliegenden Anmeldung insbesondere ein Differentialgetriebe oder ein Pumpenverteilergetriebe verstanden werden, wobei mittels der Getriebeanordnung 14 Arbeitsorgane 4, 5, 6, 7, 8 der Erntemaschine 1 mit Energie versorgt werden. Die Getriebeanordnung 14 wird durch eine Abtriebswelle von dem Antriebsmotor 9 angetrieben. Die Getriebeanordnung 14 umfasst zumindest eine Abtriebsriemenscheibe 15. Die Antriebsriemenscheibe 15 ist von einem hier nicht näher dargestellten Antriebsriemen umschlungen, wobei der Antriebsriemen zumindest eine Antriebsriemenscheibe umschlingt, die dem Antrieb der Häckseleinrichtung 6 dient. Der Antriebsriemen kann in an sich bekannter Weise zum Antrieb weitere Arbeitsorgane 4, 5, 6, 7, 8 der Erntemaschine 1 verwendet werden.

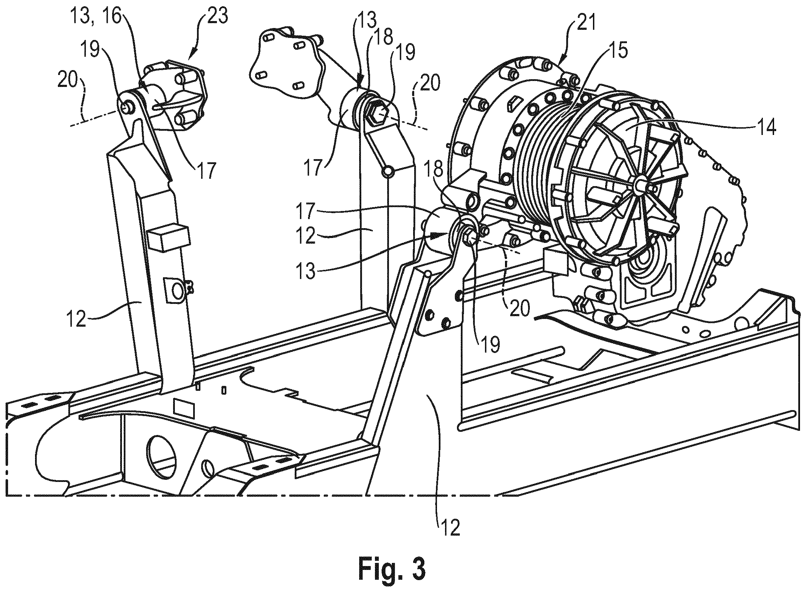

In Fig. 3 ist der Fahrzeugrahmen 10 mit den Tragarmen 12 schematisch dargestellt. Endseitig an den Tragarmen 12 befinden sich die Motorlager 13. Die Motorlager 13 umfassen jeweils einen zylindrischen Mantel 17 mit einem darin befindlichen Dämpfungselement 18, beispielsweise einem Polymer. Die Motorlager 13 sind jeweils mit einem Bolzen 19 an einem Tragarm 12 angeordnet. Der zylindrische Mantel 17 des jeweiligen Motorlagers 13 umgibt jeweils einen Bolzen 19, wobei der Bolzen 19 jeweils konzentrisch zu dem Mantel 17 angeordnet ist und eine Rotationsachse 20 des jeweiligen Motorlagers 13 bildet. Die Rotationsachsen 20 erstrecken sich jeweils in einer horizontalen Ebene. Hierbei können die jeweiligen Rotationsachsen 20 der Motorlager 13 in unterschiedlichen horizontalen Ebenen verlaufen, die sich parallel zueinander erstrecken. Ferner liegt jeweils ein in Vorwärtsfahrtrichtung VF ausgerichteter Vektor in einer der jeweiligen horizontalen Ebenen.

Ein erstes Motorlager 16 ist relativ zu den weiteren Motorlagern 13 um 90 Grad gedreht ausgerichtet. Hierbei erstreckt sich die Rotationsachse 20 des ersten Motorlagers 13 in Vorwärtsfahrtrichtung VF. Die Rotationsachsen 20 der weiteren Motorlager 13 erstrecken sich jeweils quer zur Vorwärtsfahrtrichtung VF.

Die Getriebeanordnung 14 ist an einer ersten Seite 21 an dem Antriebsmotor 9 angeordnet. Hierbei ist die Getriebeanordnung 14 an einem Ende des Antriebsmotors 9 angeordnet, welches einer sich im Wesentlichen in Vorwärtsfahrtrichtung VF erstreckenden Maschinenseite 22 der Erntemaschine 1 zugewandt ist. Das erste Motorlager 13 ist an einer der ersten Seite gegenüberliegenden zweiten Seite 23 an dem Antriebsmotor 9 angeordnet. Insgesamt ist der Antriebsmotor 9 mit exakt 3 Motorlagern 13 an dem Fahrzeugrahmen 10 angeordnet.

Ein Motorlager 13 ist unmittelbar an der Getriebeanordnung 14 angeordnet. Zwei weitere Motorlager 13, 16, welche das erste Motorlager 16 mit der in Vorwärtsfahrtrichtung VF ausgerichteten Rotationsachse 20 umfassen, sind an der gegenüberliegenden zweiten Seite 23 an dem Antriebsmotor 9 angeordnet. Hier und vorzugsweise ist das erste Motorlager 16 von den beiden auf der zweiten Seite 23 befindlichen Motorlagern 13, 16 das vordere Motorlager. Zur Halterung der Motorlager 13 ist dementsprechend an einer ersten Längsstrebe 11 des Fahrzeugrahmens 10 ein Tragarm 12 angeordnet, welcher eines der drei Motorlager 13 haltert und an der zweiten Längsstrebe 24 sind zwei Tragarme 12 angeordnet, welche die weiteren Motorlager 13, 16 haltern. Der Antriebsmotor 9 erstreckt sich zwischen der ersten und zweiten Längsstrebe 11, 24.

Das Motorlager 13, welches unmittelbar an der Getriebeanordnung 14 angeordnet ist, ist in Vorwärtsfahrtrichtung VF vor der Getriebeanordnung 14 positioniert. Demgemäß befindet sich das an der Getriebeanordnung 14 angeordnete Motorlager 13 zwischen den Arbeitsorganen 4, 5, 6, 7, 8 der Erntemaschine 1 und dem Antriebsmotor 9. Dadurch, dass sich der hier nicht näher dargestellte und beispielsweise aus der DE 10 2014 108 026 A1 Antriebsriemen ausgehend von der Getriebeanordnung 14 in Vorwärtsfahrtrichtung VF hin zu den Arbeitsorganen 4, 5, 6, 7, 8 erstreckt, werden die beim Aktivieren der Arbeitsorgane 4, 5, 6, 7, 8 in Vorwärtsfahrtrichtung VF auf die Getriebeanordnung 14 und zugleich auf den Antriebsmotor 9 wirkenden Kräfte besonders wirksam durch das Motorlager 13 gedämpft.

Das erste Motorlager 16 weist einen kleineren Durchmesser als die weiteren Motorlager 13 auf, da das erste Motorlager 16 im Wesentlichen eine quer zur Vorwärtsfahrtrichtung VF gerichtete Kippbewegung des Antriebsmotors 9 dämpft und die in diese Richtung wirkenden Momente bzw. Kräfte geringer sind als solche, die infolge einer in Vorwärtsfahrtrichtung VF gerichteten Kippbewegung des Antriebsmotors 9 auf die Motorlager 13 wirken.

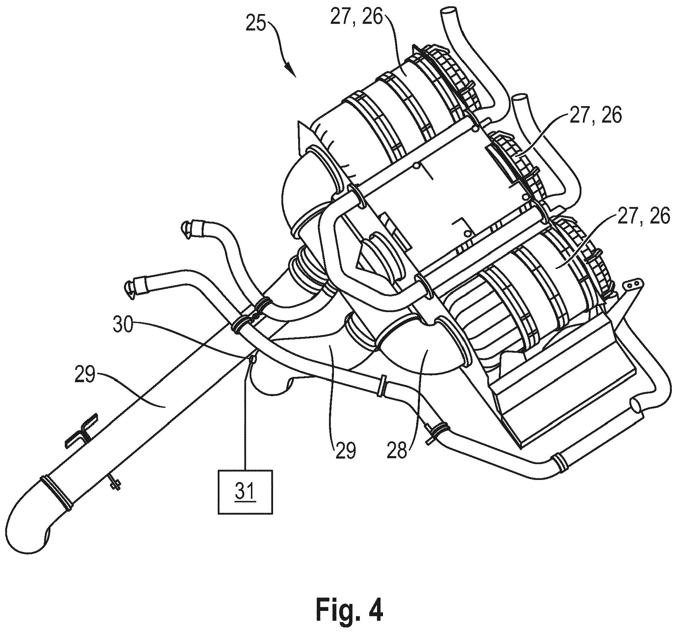

Die Erntemaschine 1 umfasst eine in Fig. 4 dargestellte Luftfilteranordnung 25. Die Luftfilteranordnung 25 ist dazu vorgesehen und eingerichtet einen den Antriebsmotor 9 zuzuführenden Luftstrom zu Filtern. Hierfür umfasst die Luftfilteranordnung 25 drei Luftfilter 26. Die Luftfilter 26 sind in einer horizontalen Ebene parallel zueinander angeordnet, wobei sich die zylindrischen Gehäuse 27 der jeweiligen Luftfilter 26 parallel zueinander erstrecken. Die drei Luftfilter 26 sind mit einem w-förmigen Verbindungsstück 28 miteinander verbunden. Das w-förmige Verbindungsstück 28 besteht aus einem w-förmig angeordneten Rohrleitungssystem, welches einen die Luftfilter 26 durchströmenden Luftstrom ausgangsseitig der Luftfilter 26 zusammenführt. Der die Luftfilter 26 durchströmende Luftstrom wird mittels zweier separater Zuleitungen 29, die an dem w-förmigen Verbindungsstück 28 angeordnet sind, dem Antriebsmotor 9 zugeführt.

Einer der Zuleitungen 29 ist ein als Drucksensor ausgeführter Sensor 30 zugeordnet. Der Sensor 30 ist dazu vorgesehen und eingerichtet einen in der Zuleitung 29 vorliegenden Unterdruck zu ermitteln. Der Unterdruck gibt einen Hinweis auf einen Verschmutzungszustand der Luftfilteranordnung 25. An den Luftfiltern 26 werden bei einem Ernteprozess Verunreinigungen wie etwa Staub oder kleinere Erntegutbestandteile herausgefiltert. Diese Verunreinigungen behindern den durch die Luftfilter 26 dem Antriebsmotor 9 zuzuführenden Luftstrom. Demgemäß nimmt mit zunehmenden Verschmutzungszustand der Luftfilter 26 zugleich der im Betrieb des Antriebsmotors 9 an den Zuleitungen anliegende Unterdruck zu. Mittels des Sensors 30 ist der Verschmutzungszustand der Luftfilter 26 überwachbar. Der Sensor 30 ist in signalübertragender Weise mit einer Steuerungseinrichtung 31 verbunden. Die Steuerungseinrichtung 31 bestimmt mittels des in der Zuleitung 29 ermittelten Unterdrucks die Restlaufzeit der Luftfilteranordnung 25. Als Restlaufzeit ist im Sinne der vorliegenden Anmeldung die verbleibende Zeit zu verstehen, bis zu der gemäß Herstellerangaben das Reinigen oder Austauschen der Luftfilter 26 erforderlich ist. Hier und vorzugsweise wird eine Hinweismeldung ausgegeben, sobald 30% Restlaufzeit der Luftfilteranordnung 25 verbleiben. Dies ermöglicht einem Fahrer der Erntemaschine 1 rechtzeitig das Reinigen oder Austauschen der Luftfilteranordnung 25 zu planen, sodass eine ungeplante Unterbrechung des Erntebetriebs zum Reinigen oder Austauschen der Luftfilter 26 vermeidbar ist. Eine weitere Hinweismeldung wird ausgegeben, sobald die Restlaufzeit verbraucht ist, sodass der Fahrer der Erntemaschine 1 eine Information erhält, dass die Luftfilter 26 gereinigt oder ausgetauscht werden sollten.

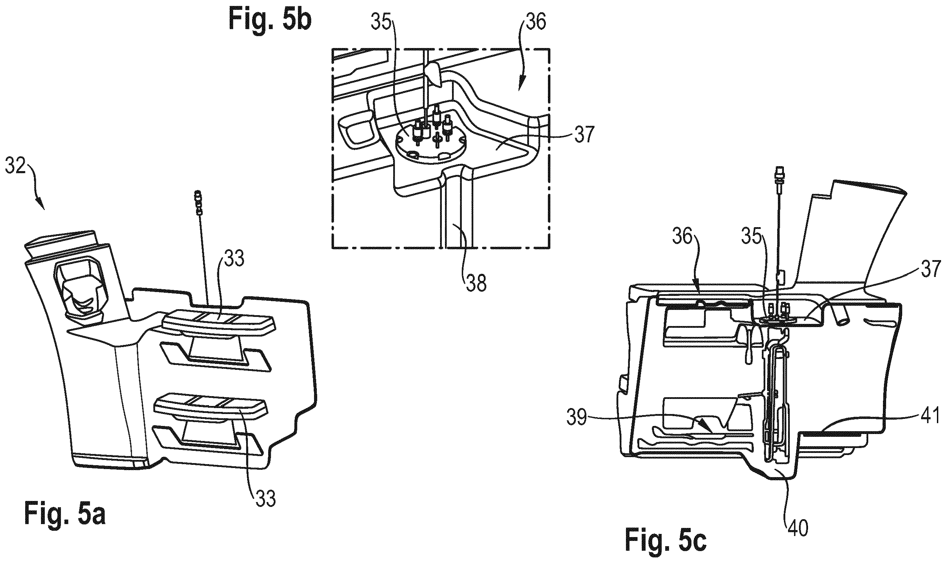

Die Erntemaschine 1 umfasst einen in den Fig. 5a, 5b und 5c dargestellten Harnstofftank 32. Der Harnstofftank 32 bildet ein Reservoir für eine dem Abgasstrom des Antriebsmotors 9 zuzuführende Harnstoff-Lösung. Wie Fig. 5a zeigt, sind an dem Harnstofftank 32 stufenförmige Aufstiegselemente 33 angeordnet, die einem Fahrer für den Aufstieg hin zu einer Kabine 34 der Erntemaschine 1 dienen. Obenseitig ist an dem Harnstofftank 32 eine in Fig. 5b und 5c dargestellte Entnahmeeinheit 35 zum Fördern von in dem Harnstofftank befindlichen Harnstoff angeordnet. Die Entnahmeeinheit 35 erstreckt sich ausgehend von einer Oberseite 36 des Harnstofftanks 32 in den Harnstofftank hinein hin zu einen Tankboden 39 des Harnstofftanks 32. Vorzugsweise kann die Entnahmeeinheit 35 als Pumpe zum Fördern von Harnstoff ausgebildet sein. Die Entnahmeeinheit 35 ist in einer an der Oberseite 36 des Harnstofftanks 32 befindlichen Vertiefung 37 angeordnet. Durch die Anordnung der Entnahmeeinheit 35 in der Vertiefung 37 steht die Entnahmeeinheit 35 nicht über eine Hauptfläche der Oberseite 36 hervor, sodass die Entnahmeeinheit 35 vor Beschädigungen geschützt ist. An die Vertiefung 37 grenzt eine nutförmige Sicke 38 an, welche einen Kanal zum Ableiten eines Fluids, wie beispielsweise Regenwasser, aus der Vertiefung 37 ausbildet.

Hier und vorzugsweise weist der Harnstofftank 32 im Tankboden 39 eine Entnahmestelle 40 auf, wobei die Entnahmestelle 40 sich unterhalb einer Hauptbodenebene 41 befindet. Die Entnahmestelle 40 bildet ein unterhalb der Hauptbodenebene 41 befindliches Sammelbecken aus. Eine Entnahmeöffnung der Entnahmeeinheit 35 befindet sich innerhalb der Entnahmestelle 40. Hierdurch sammelt sich bei niedrigen Füllstand des Harnstofftanks 32 der restliche Harnstoff innerhalb der Entnahmestelle 40, sodass auch bei niedrigen Füllstand der restliche Harnstoff mittels der Entnahmeeinheit 35 aus den Harnstofftank 32 herausförderbar ist.

**Bezugszeichenliste:**

| | | | |
|---|---|---|---|
| 1 | Erntemaschine | 34 | Kabine |
| 2 | Feldhäcksler | 35 | Entnahmeeinheit |
| 3 | Erntegut | 36 | Oberseite |
| 4 | Vorsatzgerät | 37 | Vertiefung |
| 5 | Einzugsorgan | 38 | Sicke |
| 6 | Häckseleinrichtung | 39 | Tankboden |
| 7 | Konditioniereinrichtung | 40 | Entnahmestelle |
| 8 | Auswurfbeschleuniger | 41 | Hauptbodenebene |
| 9 | Antriebsmotor | | |
| 10 | Fahrzeugrahmen | VF | Vorwärtsfahrtrichtung |
| 11 | Erste Längsstrebe | | |
| 12 | Tragarm | | |
| 13 | Motorlager | | |
| 14 | Getriebeanordnung | | |
| 15 | Abtriebsriemenscheibe | | |
| 16 | Erstes Motorlager | | |
| 17 | Mantel | | |
| 18 | Dämpfungselement | | |
| 19 | Bolzen | | |
| 20 | Rotationsachse | | |
| 21 | Erste Seite | | |
| 22 | Maschinenseite | | |
| 23 | Zweite Seite | | |
| 24 | Zweite Längsstrebe | | |
| 25 | Luftfilteranordnung | | |
| 26 | Luftfilter | | |
| 27 | Gehäuse | | |
| 28 | Verbindungsstück | | |
| 29 | Zuleitung | | |
| 30 | Sensor | | |
| 31 | Steuerungseinrichtung | | |
| 32 | Harnstofftank | | |
| 33 | Aufstiegselement | | |

## Patentansprüche

1. Selbstfahrende Erntemaschine (1), insbesondere Feldhäcksler, mit einem Antriebsmotor (9) und einem Fahrzeugrahmen (10), wobei der Antriebsmotor (9) mit einer Mehrzahl von Motorlagern (13, 16) an dem Fahrzeugrahmen (10) angeordnet ist, wobei ein erstes Motorlager (16) relativ zu den weiteren Motorlagern (13) um 90 Grad gedreht ausgerichtet ist, wobei die Erntemaschine (1) eine von dem Antriebsmotor (9) angetriebene Getriebeanordnung (14) umfasst, welche auf einer ersten Seite (21) des Antriebsmotors (9) angeordnet ist, wobei ein Motorlager (13) an der Getriebeanordnung (14) angeordnet ist, wobei sich das auf der ersten Seite (21) befindliche Motorlager (13) in Vorwärtsfahrtrichtung (VF) vor der Getriebeanordnung (14) befindet.

2. Selbstfahrende Erntemaschine (1) nach Anspruch 1, **dadurch gekennzeichnet, dass** sich eine Rotationsachse (20) des ersten Motorlagers (16) in Vorwärtsfahrtrichtung (VF) der Erntemaschine (1) erstreckt und die Rotationsachsen (20) der weiteren Motorlager (13) quer zur Vorwärtsfahrtrichtung (VF) der Erntemaschine (1) erstrecken.

3. Selbstfahrende Erntemaschine (1) nach Anspruch 2, **dadurch gekennzeichnet, dass** die Rotationsachsen (20) der Motorlager (13, 16) jeweils in einer horizontalen Ebene liegen.

4. Selbstfahrende Erntemaschine (1) nach einem der Ansprüche 1 bis 3, **dadurch gekennzeichnet, dass** das erste Motorlager (16) einen kleineren Durchmesser als die weiteren Motorlager (13) aufweist.

5. Selbstfahrende Erntemaschine (1) nach Anspruch 1, **dadurch gekennzeichnet, dass** das erste Motorlager (16) an einer der ersten Seite (21) gegenüberliegenden zweiten Seite (23) an dem Antriebsmotor (9) angeordnet ist.

6. Selbstfahrende Erntemaschine (1) nach einem der Ansprüche 1 oder 5, **dadurch gekennzeichnet, dass** der Antriebsmotor (9) mit drei Motorlagern (13, 16) an dem Fahrzeugrahmen (10) angeordnet ist, wobei auf der zweiten Seite (23) zwei Motorlager (13, 16) angeordnet sind, wobei das erste um 90 Grad gedreht ausgerichtete Motorlager (16) in Vorwärtsfahrtrichtung (VF) das vordere der auf der zweiten Seite befindlichen Motorlager (13, 16) ist.

7. Selbstfahrende Erntemaschine (1) nach einem der Ansprüche 1 bis 6, **dadurch gekennzeichnet, dass** die Erntemaschine (1) eine Luftfilteranordnung (25) zum Filtern eines dem Antriebsmotor (9) zuzuführenden Luftstroms aufweist, wobei die Luftfilteranordnung (25) drei in einer horizontalen Ebene parallel ausgerichtete Luftfilter (26) umfasst.

8. Selbstfahrende Erntemaschine (1) nach Anspruch 7, **dadurch gekennzeichnet, dass** an die drei Luftfilter (26) ein w-förmiges Verbindungsstück (28) zum Zusammenführen eines die Luftfilter (26) durchströmenden Luftstroms angeordnet ist.

9. Selbstfahrende Erntemaschine (1) nach einem der Ansprüche 7 bis 8, **dadurch gekennzeichnet, dass** in einer von den Luftfiltern (26) hin zu dem Antriebsmotor (9) führenden Zuleitung (29) ein Sensor (30), insbesondere ein Drucksensor, zur Luftfilterüberwachung angeordnet ist.

10. Selbstfahrende Erntemaschine (1) nach Anspruch 9, **dadurch gekennzeichnet, dass** der Sensor (30) mit einer Steuerungseinrichtung (31) in signalübertragender Weise verbunden ist, wobei die Steuerungseinrichtung (31) dazu vorgesehen und eingerichtet ist, einen Hinweis zu einer Restlaufzeit der Luftfilteranordnung (25) auszugeben, wobei vorzugsweise eine erste Hinweismeldung ausgegeben wird, sobald 30% Restlaufzeit der Luftfilteranordnung (25) verbleiben und weiter vorzugsweise ein zweiter Hinweis ausgegeben wird, sobald die Restlaufzeit verbraucht ist.

11. Selbstfahrende Erntemaschine (1) nach einem der Ansprüche 1 bis 10, **dadurch gekennzeichnet, dass** die Erntemaschine (1) einen Harnstofftank (32) umfasst mit einer Entnahmeeinheit (35) zum Leiten und/oder Fördern von Harnstoff, wobei die Entnahmeeinheit (35) in einer Vertiefung (37) an der Oberseite (36) des Harnstofftanks (32) angeordnet ist.

12. Selbstfahrende Erntemaschine (1) nach Anspruch 11, **dadurch gekennzeichnet, dass** an die Vertiefung (37) eine Sicke (38) angrenzt, welche einen Kanal zum Ableiten eines Fluids aus der Vertiefung (37) ausbildet.

13. Selbstfahrende Erntemaschine (1) nach einem der Ansprüche 11 bis 12, **dadurch gekennzeichnet, dass** der Harnstofftank (32) im Tankboden (39) eine Entnahmestelle (40) aufweist, wobei die Entnahmestelle (40) sich unterhalb einer Hauptbodenebene (41) befindet.

## Claims

1. Self-propelled harvester (1), in particular forage harvester, with a
drive motor (9) and a vehicle frame (10), wherein the drive motor (9) is arranged on the vehicle frame (10) by way of a plurality of engine mounts (13, 16), wherein
a first engine mount (16) is oriented relative to the further engine mounts (13) so as to be rotated by 90 degrees, wherein the harvester (1) comprises a gear arrangement (14) which is driven by the drive motor (9) and is arranged on a first side (21) of the drive motor (9), wherein one engine mount (13) is arranged on the gear arrangement (14), wherein the engine mount (13) located on the first side (21) is located in the forward travel direction (VF) in front of the gear arrangement (14).

2. Self-propelled harvester (1) according to Claim 1, **characterized in that** a rotation axis (20) of the first engine mount (16) extends in the forward travel direction (VF) of the harvester (1), and the rotation axes (20) of the further engine mounts (13) extend transversely to the forward travel direction (VF) of the harvester (1).

3. Self-propelled harvester (1) according to Claim 2, **characterized in that** the rotation axes (20) of the engine mounts (13, 16) are in each case in a horizontal plane.

4. Self-propelled harvester (1) according to one of Claims 1 to 3, **characterized in that** the first engine mount (16) has a smaller diameter than the further engine mounts (13).

5. Self-propelled harvester (1) according to Claim 1, **characterized in that** the first engine mount (16) is arranged on a second side (23) opposite the first side (21) on the drive motor (9).

6. Self-propelled harvester (1) according to one of Claims 1 or 5, **characterized in that** the drive motor (9) is arranged on the vehicle frame (10) by way of three engine mounts (13, 16), wherein two engine mounts (13, 16) are arranged on the second side (23), wherein the first engine mount (16) oriented so as to be rotated by 90 degrees is in the forward travel direction (VF) the front one of the engine mounts (13, 16) located on the second side.

7. Self-propelled harvester (1) according to one of Claims 1 to 6, **characterized in that** the harvester (1) has an air filter arrangement (25) for filtering an air flow to be supplied to the drive motor (9), wherein the air filter arrangement (25) comprises three air filters (26) oriented in parallel in a horizontal plane.

8. Self-propelled harvester (1) according to Claim 7, **characterized in that** a W-shaped connecting piece (28) for merging an air flow through the air filters (26) is arranged on the three air filters (26).

9. Self-propelled harvester (1) according to one of Claims 7 to 8, **characterized in that** a sensor (30), in particular a pressure sensor, for air filter monitoring is arranged in a supply line (29) leading from the air filters (26) to the drive motor (9).

10. Self-propelled harvester (1) according to Claim 9, **characterized in that** the sensor (30) is connected so as to transmit signals to a control device (31), wherein the control device (31) is provided and specified to issue an indication of a remaining lifetime of the air filter arrangement (25), wherein preferably a first information message is issued as soon as 30% remaining lifetime of the air filter arrangement (25) remains, and a second indication is furthermore preferably issued as soon as the remaining lifetime is used up.

11. Self-propelled harvester (1) according to one of Claims 1 to 10, **characterized in that** the harvester (1) comprises a urea tank (32) with a retrieval unit (35) for directing and/or conveying urea, wherein the retrieval unit (35) is arranged in a depression (37) at the top (36) of the urea tank (32).

12. Self-propelled harvester (1) according to Claim 11, **characterized in that** adjoining the depression (37) is a corrugation (38) which forms a channel for discharging a fluid from the depression (37).

13. Self-propelled harvester (1) according to one of Claims 11 to 12, **characterized in that** the urea tank (32) in the tank bottom (39) has a retrieval point (40), wherein the retrieval point (40) is located below a main floor level (41).

## Revendications

1. Moissonneuse (1) automotrice, en particulier ensileuse, avec un
moteur d'entraînement (9) et un châssis de véhicule (10), le moteur d'entraînement (9) étant disposé avec une multitude de paliers de moteur (13, 16) sur le châssis de véhicule (10),
un premier palier de moteur (16) étant orienté de manière tournée de 90 degrés par rapport aux autres paliers de moteur (13), la moissonneuse (1) comprenant un ensemble de transmission (14) entraîné par le moteur d'entraînement (9), lequel est disposé sur un premier côté (21) du moteur d'entraînement (9), un palier de moteur (13) étant disposé sur l'ensemble de transmission (14), le palier de moteur (13) se trouvant sur le premier côté (21) se trouvant devant l'ensemble de transmission (14) dans le sens de marche avant (VF).

2. Moissonneuse (1) automotrice selon la revendication 1, **caractérisée en ce qu'**un axe de rotation (20) du premier palier de moteur (16) s'étend dans le sens de marche avant (VF) de la moissonneuse (1) et les axes de rotation (20) des autres paliers de moteur (13) s'étendent transversalement au sens de marche avant (VF) de la moissonneuse (1).

3. Moissonneuse (1) automotrice selon la revendication 2, **caractérisée en ce que** les axes de rotation (20) des paliers de moteur (13, 16) sont situés chacun dans un plan horizontal.

4. Moissonneuse (1) automotrice selon l'une des revendications 1 à 3, **caractérisée en ce que** le premier palier de moteur (16) présente un diamètre plus petit que les autres paliers de moteur (13).

5. Moissonneuse (1) automotrice selon la revendication 1, **caractérisée en ce que** le premier palier de moteur (16) est disposé sur le moteur d'entraînement (9) sur un second côté (23) opposé au premier côté (21).

6. Moissonneuse (1) automotrice selon l'une des revendications 1 ou 5, **caractérisée en ce que** le moteur d'entraînement (9) est disposé avec trois paliers de moteur (13, 16) sur le châssis du véhicule (10), deux paliers de moteur (13, 16) étant disposés sur le second côté (23), le premier palier de moteur (16) orienté de manière tournée de 90 degrés dans le sens de marche avant (VF) étant le palier de moteur avant des paliers de moteur (13, 16) se trouvant sur le second côté.

7. Moissonneuse (1) automotrice selon l'une des revendications 1 à 6, **caractérisée en ce que** la moissonneuse (1) comporte un ensemble de filtre à air (25) pour filtrer un flux d'air à amener au moteur d'entraînement (9), l'ensemble de filtre à air (25) comprenant trois filtres à air (26) orientés parallèlement dans un plan horizontal.

8. Moissonneuse (1) automotrice selon la revendication 7, **caractérisée en ce qu'**une pièce de raccordement (28) en forme de w est disposée sur les trois filtres à air (26) pour la fusion d'un flux d'air traversant les filtres à air (26).

9. Moissonneuse (1) automotrice selon l'une des revendications 7 à 8, **caractérisée en ce qu'**un capteur (30), en particulier un capteur de pression, est disposé dans une conduite d'arrivée (29) menant des filtres à air (26) au moteur d'entraînement (9) pour surveiller le filtre à air.

10. Moissonneuse (1) automotrice selon la revendication 9, **caractérisée en ce que** le capteur (30) est raccordé de manière à transmettre des signaux à un dispositif de commande (31), le dispositif de commande (31) étant prévu et mis au point pour délivrer une indication d'une durée de fonctionnement résiduelle de l'ensemble de filtre à air (25), de préférence un premier message d'indication étant délivré dès qu'il reste 30 % de la durée de fonctionnement résiduelle de l'ensemble de filtre à air (25) et, de préférence encore, une deuxième indication étant par ailleurs émise de préférence dès que la durée de fonctionnement résiduelle est passée.

11. Moissonneuse (1) automotrice selon l'une des revendications 1 à 10, **caractérisée en ce que** la moissonneuse (1) comporte un réservoir d'urée (32) avec une unité de prélèvement (35) pour acheminer et/ou transporter de l'urée, l'unité de prélèvement (35) étant disposée dans un renfoncement (37) sur le côté supérieur (36) du réservoir d'urée (32).

12. Moissonneuse (1) automotrice selon la revendication 11, **caractérisée en ce qu'**une moulure (38), qui forme un canal pour évacuer un fluide hors du renfoncement (37), jouxte le renfoncement (37).

13. Moissonneuse (1) automotrice selon l'une des revendications 11 à 12, **caractérisée en ce que** le réservoir d'urée (32) comporte un point de prélèvement (40) dans le fond de réservoir (39), le point de prélèvement (40) se trouvant au-dessous d'un plan de fond principal (41).
